## Europäisches Patentamt
## European Patent Office
## Office européen des brevets

(11) Veröffentlichungsnummer: **0 209 167**
**B1**

(12) # EUROPÄISCHE PATENTSCHRIFT

(45) Veröffentlichungstag der Patentschrift:
15.02.89

(51) Int. Cl.⁴: **D01F 6/62,** B60C 9/00,
**D02G 3/48**

(21) Anmeldenummer: **86200933.9**

(22) Anmeldetag: **29.05.86**

(54) Verfahren zur Herstellung eines imprägnierten, dimensionsstabilen Polyesterkordes sowie einen Polyesterkord nach dem Verfahren.

(30) Priorität: **19.06.85 CH 2597/85**

(43) Veröffentlichungstag der Anmeldung:
**21.01.87 Patentblatt 87/4**

(45) Bekanntmachung des Hinweises auf die Patenterteilung:
**15.02.89 Patentblatt 89/7**

(84) Benannte Vertragsstaaten:
**CH DE FR GB IT LI LU**

(56) Entgegenhaltungen:
**CH-A- 513 992
DE-A- 2 022 748
FR-A- 2 225 553
FR-A- 2 369 359
FR-A- 2 425 483
US-A- 3 838 561
US-A- 3 966 867
US-A- 4 070 432**

(73) Patentinhaber: **VISCOSUISSE SA,
CH-6020 Emmenbrücke(CH)**

(72) Erfinder: **Lang, Bruno, Wilhof weg 1, CH-6275 Ballwil(CH)**

(74) Vertreter: **Herrmann, Peter Johannes, c/o Viscosuisse
SA Patentabteilung R1P, CH-6020 Emmenbrücke(CH)**

**Beschreibung**

Die Erfindung betrifft ein Verfahren zur Herstellung eines dimensionsstabilen Polyesterkordes, aus wenigstens 95 Gew.-% Polyethylenterephthalat mit einer Grenzviskosität von mehr als 0,70 dl/g, mit einem Titer von wenigstens 1100 x 2 dtex, durch eine zweistufige Wärmebehandlung durch Heissverstrecken und Heissentspannen, wobei das Verstrecken bei einer höheren Temperatur als das Entspannen erfolgt sowie einen Polyesterkord nach dem Verfahren.

Fahrzeugreifen üblicher Bauart bestehen, in wesentlichen Teilen, aus einem Festigkeitsträger in der Form von Kord, der in Gummi einvulkanisiert ist. Die äussere Form und insbesondere die Lauffläche werden durch diese, meist speziell zusammengestellte, Gummimischung bestimmt. Damit solche Reifen gute Laufeigenschaften und eine lange Lebensdauer haben, müssen unter anderem zwei wichtige Bedingungen erfüllt sein: Der Reifen muss in seiner äusseren Form sehr gleichmässig sein und deshalb schon bei der Herstellung sowie im späteren Gebrauch und bei raschem Fahren, dimensionsstabil bleiben.

Werden für Festigkeitsträger dimensionsstabile Produkte wie Metalldraht verwendet, so ist dieses Ziel etwas leichter, durch präzisen Reifenaufbau, zu erreichen. Sobald aber Material wie Zwirne aus hochfesten Synthesegarnen verwendet werden, ist die Aufgabe bisher nur unbefriedigend gelöst, da während oder unmittelbar nach dem Vulkanisieren des Gummis der Festigkeitsträger, je nach Verarbeitungsbedingungen, schrumpft oder längt, ohne dass der Festigkeitsträger dabei unter Kontrolle gehalten werden kann.

Verfahren zur zweistufigen Wärmebehandlung von Polyestergarnen sind bekannt. Nach der DE-A 2 022 748 wird in einer ersten Stufe ein Polyestergarn zwischen 199°C und 254°C um wenigstens 8% verstreckt und in einer zweiten Stufe bei 163 bis 204°C um mindestens 7% entspannt. Der resultierende Polyesterkord weist einen Wärmeschrumpf bei 160°C nicht unter 5,8% auf. Obwohl die Festigkeitseigenschaften eines solchen Kordes verbessert sind, verursacht der relativ hohe Wärmeschrumpf eine immer noch unbefriedigende Dimensionsstabilität im fertigen Luftreifen.

Aus der DE-A 2 747 690 ist die Verwendung eines Polyesterfilamentgarnes auf Basis von wenigstens 85 Mol.-% Polyethylenterephthalat in Luftreifen bekannt. Nach dem beschriebenen Verfahren werden die Eigenschaften des zum Einbau verwendeten Garnes von bisher mehr als 10% Schrumpfung bis auf 7,8 bis 5,0% Schrumpfung, wenn sie erhitzt werden, verbessert. Obwohl die Verwendung von Polyesterfilamentgarn mit einem freien Thermoschrumpf von etwa 5% vielen Ansprüchen genügt, ist er den Ansprüchen für Luftreifen hoher Beanspruchung häufig noch nicht gewachsen.

Solche Polyesterfäden, die mehr als 5% schrumpfen, sei es, dass bereits das Ausgangsmaterial diesen sehr hohen Schrumpf hatte oder sei es, dass im Lauf der Reifenherstellung unmittelbar nach dem Vulkanisieren der heisse Reifen unter hohen Druck gesetzt wurde (sogenannte post cure inflation), sind immer noch nicht dimensionsstabil: Im Laufe des Gebrauchs ändert sich ihre Länge, was zu unruhigem Lauf der Reifen führt, weil diese Längenänderung unkontrolliert ist.

Aufgabe der Erfindung ist es, ein Verfahren zur Herstellung eines verbesserten dimensionsstabilen Polyesterkords zur Verfügung zu stellen, der während der Vulkanisation und im Gebrauch eine minimale Schrumpfung aufweist.

Eine weitere Aufgabe ist es, ein Verfahren zur wirtschaftlichen Herstellung eines solchen dimensionsstabilen Kordes mit niedrigem Schrumpf, genügend hohem Anfangsmodul und verbesserter Ermüdungsbeständigkeit zu schaffen.

Die Aufgabe wird erfindungsgemäss nach Patentanspruch 1 gelöst und ist dadurch gekennzeichnet, dass der Polyesterkord in einem ersten Verfahrensschritt um 3 bis 7% verstreckt und in einem zweiten Verfahrensschritt bei 205 bis 250°C einstufig um 3 bis 7% entspannt wird.

Es wurde überraschend gefunden, dass bei Entspannungstemperaturen über 205°C eine Verbesserung der Dimensionsstabilität eintritt. Als wesentlich für die Relaxierung hat sich ein Temperaturbereich von 205 bis 250°C erwiesen, wobei der Kord aus der Verstreckungszone beispielsweise bei 240°C nicht wesentlich abgekühlt werden muss.

Die Thermoschrumpfmessung erfolgt an Polyesterfäden, die direkt aus imprägnierten oder kalandrierten Geweben oder fertigen Luftreifen herauspräpariert wurden. Solche Kordfäden dürfen bei 160°C, während 5 min. Verweilzeit und mit einem Vorspanngewicht von 0,1 cN/tex belastet, nicht mehr als 1,8%, vorzugsweise weniger als 1,2% schrumpfen. Ein solcher Kord hat den Vorteil, dass praktisch kein unkontrolliertes Schrumpfen während des Vulkanisierens und im heissen Reifen auftritt.

Es ist besonders vorteilhaft, wenn sich die Kordlänge bei der Vulkanisation um weniger als 1% ändert, besonders vorteilhaft ist eine Längenänderung von weniger als 0,3%. Auch die Schrumpfkraft beträgt zweckmässig weniger als 0,7 cN/tex, vorzugsweise weniger als 0,4 cN/tex.

Es entfällt auch in besonders vorteilhafter Weise die bisherige Notwendigkeit, den noch heissen Reifen nach der Vulkanisation kräftig aufzupumpen, um einen zu grossen Schrumpf, durch Nachverstrecken, wieder zu kompensieren (post cure inflation) und den Reifen so in die richtigen Abmessungen zu bringen; bei diesem Vorgehen ist der einzelne Festigkeitsträger unkontrolliert, was zu unregelmässig gebauten Reifen führen kann.

Es ist von Vorteil, die Verstreckung und Relaxierung so zu wählen, dass bei Kordbelastungen von 1,5% Dehnung die Zugkraft etwas grösser als 6,8 cN/tex und bei 5% Dehnung etwas grösser als 12 cN/tex ist. Dieser Bereich liegt in der praktischen Anwendung als Reifenkord oberhalb des üblichen Arbeitsbereichs und begünstigt, bedingt durch die hohe Verdehnung, ein sehr gutes Ermüdungsverhalten.

Der darunter liegende Bereich von 0 bis 6,8 cN/tex bleibt, aufgrund des hohen Anfangsmoduls von Polyester, vom Relaxierungsgrad weitgehend unbeeinflusst und garantiert so hohe Uniformität, Stabilität und Arbeitsvermögen im Reifen.

Beste Kord- und Kordgewebestabilität und Ermüdungsbeständigkeit werden erreicht, wenn der Polyesterkord bei der Heissverstreckung eine Zugkraft von ~5 cN/tex und bei der nachfolgenden Relaxierung einer Zugkraft von ~1,0 cN/tex ausgesetzt wird. Daraus resultiert, je nach verwendeter Polyester-Garnprovenienz, am imprägnierten oder fertig kalandrierten Kordgewebe ein Thermoschrumpf, bei 0,1 cN/tex Vorspannung, von weniger als 1,8%, vorzugsweise weniger als 1,2% und eine Schrumpfkraft von weniger als 0,7 cN/tex. vorzugsweise weniger als 0,4 cN/tex.

Die mittels Disk-Fatigue-Tester bei 6% Dehnung und 6% Kompression nach 10,8 MC (Megacyclen) gemessene Ermüdungsbeständigkeit, liegt, gegenüber konventionell behandeltem Polyesterkord, der zu PCI-behandelten Reifen verarbeitet wird, 5–20% höher. Dadurch resultiert eine beträchtlich höhere Lebensdauer der Reifen.

Ein so behandelter Polyesterkord ist im Reifen bei Betriebsdruck, mit temporären Betriebstemperaturen bis 100°C, gemessen im abgekühlten Zustand, nicht mehr als 1,5% bleibend verdehnt und somit genügend dimensionsstabil.

Bei einem bevorzugten Herstellungsverfahren des erfindungsgemässen Kordes, dessen Polyesterfäden mit einer Grenzviskosität von mehr als 0,70 bis 1,0 durch, an sich bekannte Spinn- und Konventierverfahren, vorerst zu Rohkord verarbeitet sind, wird in einem ersten Verfahrensschritt bei einer Temperatur von 220–250°C, vorzugsweise bei 240°C unter hohem Zug um wenigstens 3% und höchstens 7%, vorzugsweise 4 bis 7% heissverstreckt. In einem zweiten Verfahrensschritt wird bei 205–250°C, vorzugsweise bei 210°C, um höchstens 7% und mindestens 3% relaxiert. Es resultiert eine Gesamtverstreckung von weniger als 4%, vorzugsweise etwa um 1%.

Die Erfindung soll anhand von Beispielen näher erläutert werden:

Beispiel 1

Ein Polyesterkord aus LS-Polyester, dtex 1100 x 2 mit 470/470 tpm Zwirn, wurde bei 240°C um 7% während 45 s verstreckt und bei 210°C um 0% während 50 s relaxiert. Es resultiert, bei 1,5% Dehnung, eine Zugkraft von 25 N oder 10,0 cN/tex und ein Thermoschrumpf bei 160°C von 5,1% mit 420 cN Schrumpfkraft.

Beispiel 2

Der Kord gemäss Beispiel 1 wurde gleichfalls um 7% während 45 s verstreckt und um 3% während 50 s relaxiert. Es ergab sich bei 1,5% Dehnung eine Zugkraft von 22 N oder 8,7 cN/tex und ein Thermoschrumpf bei 160°C von 2,5 mit 210 cN Schrumpfkraft.

Beispiel 3

Der Kord gemäss Beispiel 1 wurde um 7% während 45 s verstreckt und um 7% während 50 s relaxiert. Es resultiert bei 1,5% Dehnung eine Zugkraft von 19 N oder 7,2 cN/tex und ein Thermoschrumpf bei 160°C von 0,8% mit 88 cN Schrumpfkraft.

Beispiel 4 (Vergleichsbeispiel)

Der Kord gemäss Beispiel 1 wurde weder verstreckt noch relaxiert, bekannt als klassische 0%/0%-Variante. Hier resultiert bei 1,5% Dehnung eine Zugkraft von 20 N oder 7,6 cN/tex und ein Thermoschrumpf bei 160°C von 2,2% mit 220 cN Schrumpfkraft.

Der erfindungsgemässe Polyesterkord bringt, im Vergleich zu den bisher verwendeten Standard-Polyestertypen für Reifenkorde, eine Verbesserung der Dimensionsstabilität, welche eher mit Rayonkorden vergleichbar ist. Beste Dimensionsstabilität, Festigkeit und Ermüdungsbeständigkeit bei Reifenkord bzw. bei Reifenkordgeweben werden erfindungsgemäss erreicht, wenn die Kordgewebe beim Imprägnieren möglichst stark verstreckt und anschliessend möglichst stark relaxiert werden.

Die auf diese Weise hergestellten Gewebe sind für Reifen, Förderbänder, Treibriemen und Schläuche wegen ihrer rayonähnlichen Uniformität, Dimensionsstabilität und geringen Hysterese bestens geeignet.

**Patentansprüche**

1. Verfahren zur Herstellung eines dimensionsstabilen Polyesterreifenkordes, bestehend aus wenigstens 95 Gew.-% Polyethylenterephthalat mit einer Grenzviskosität von mehr als 0,70 dl/g, mit einem Titer von wenigstens dtex 1100 x 2, durch eine zweistufige Wärmebehandlung des Polyesterkordes mittels Heissverstrecken und Heissentspannen, wobei das Verstrecken bei einer höheren Temperatur als das Entspannen erfolgt, dadurch gekennzeichnet, dass der Polyesterreifenkord in einem ersten Verfahrensschritt um 3 bis 7% verstreckt und in einem zweiten Verfahrensschritt bei 205 bis 250°C einstufig um 3 bis 7% entspannt wird.

2. Polyesterreifenkord dadurch gekennzeichnet, dass der imprägnierte Polyesterreifenkord unter den Bedingungen eines Reifendrucks von 2 bar und 100°C eine bleibende Verdehnung von weniger als 1,5% erleidet und einen Thermoschrumpf, gemessen bei 160°C in Luft, von weniger als 1,8% aufweist.

3. Polyesterreifenkord nach Anspruch 2, dadurch gekennzeichnet, dass der Kord beim Vulkanisieren seine Länge um weniger als 1% ändert und eine Schrumpfkraft von weniger als 0,7 cN/tex erzeugt.

4. Polyesterreifenkord nach Anspruch 2, dadurch gekennzeichnet, dass die Ermüdungsbeständigkeit des Kordes bei 10,8 MC, 6% Dehnung und 6% Kompression gemessen, einen Reisskraftabfall von weniger als 20% erleidet.

5. Polyesterreifenkord nach Anspruch 2, dadurch gekennzeichnet, dass die Zugkraft des Kordes bei 1,5% Dehnung grösser als 6,8 cN/tex und bei 5% Dehnung grösser als 12 cN/tex ist.

6. Polyesterreifenkord nach Anspruch 2, dadurch gekennzeichnet, dass der Thermoschrumpf am fertig kalandrierten Kordgewebe bei 160°C, mit 0,1 cN/tex Vorspannung gemessen, 1,0 bis 1,8% beträgt.

7. Poyesterreifenkord nach Anspruch 2, dadurch gekennzeichnet, dass die Gesamtverstreckung des Kordes 1 bis 3% beträgt.

## Claims

1. Process for the production of dimension-stable polyester tyre cord, comprising of at least 95 percent by weight of polyethylene terephthalate having an intrinsic viscosity of more than 0.70 dl/g and a titer of at least dtex 1100 x 2, by means of a two-stage heat treatment of the polyester cord, including hot stretching and hot relaxation, the stretching effected at a higher temperature than the relaxation, characterized by stretching the polyester tyre cord between 3 and 7 percent in a first process step, and relaxing the polyester tyre cord in a single step between 3 and 7 percent in a second process step at a temperature between 205–250°C.

2. Polyester tyre cord characterized in that the impregnated polyester tyre cord displays a residual lengthening of less than 1.5% with a tyre pressure of 2 bar at a temperature of 100°C having a thermal shrinkage of less than 1.8% measured at a temperature of 160°C in air.

3. Polyester tyre cord according to claim 2, characterized in that the cord displaying upon vulcanization a change in length of less than 1 percent and a shrinkage force of less than 0.7 cN/tex.

4. Polyester tyre cord according to claim 2, characterized in that the cord displaying a fatigue resistance which suffers a drop in tensile strength of less than 20 percent measured at 10.8 MC, 6 percent strain and 6 percent compression.

5. Polyester tyre cord according to claim 2, displaying a tension of greater than 6.8 cN/tex upon 1.5 percent strain and greater than 12 cN/tex upon 5 percent strain.

6. Polyester tyre cord according to claim 2, displaying in prepared, calendared cord fabric a thermal shrinkage between 1.0 and 1.8 percent measured at a temperature of 160°C with 0.1 cN/tex prestress.

7. Polyester tyre cord according to claim 2, displaying a net strain between 1 and 3 percent.

## Revendications

1. Procédé pour la fabrication d'un fil polyester pour pneu qui a une stabilité dimensionelle, constitué d'au moins 95 m/m% de polyéthylènetérephthalate avec une viscosité supérieure à 0,70 dl/g ayant au moins un titre de dtex 1100 x 2, le fil polyester étant soumis à un traitement thermique s'effectuant en deux étapes, au moyen d'un étirage à chaud et d'une relaxation à chaud, où l'étirage s'effectue à plus haute température que la relaxation, caractérisé en ce que, le fil polyester pour pneu est dans un premier temps étiré de 3 à 7% et dans un deuxième temps relaxé de 3 à 7% en une étape avec des températures de 205 à 250°C.

2. Fil polyester pour pneu caractérisé, en ce que, le fil polyester imprégné pour pneu montre selon les conditions d'un pneu sous une pression de 2 bar à 100°C un allongement restant inférieur à 1,5% et un rétrécissement à la chaleur, mesuré à l'air à 160°C, inférieur à 1,8%.

3. Fil polyester pour pneu selon la revendication 2, caractérisé en ce que le fil varie de moins de 1% en longueur lors de la vulcanisation et produit une force de rétrécissement inférieur à 0,7 cN/tex.

4. Fil polyester pour pneu selon la revendication 2, caractérisé en ce que la résistance à la fatigue du fil à 10,8 MC, mesuré à 6% d'allongement et 6% de compression, subit une chute de force à la rupture inférieur à 20%.

5. Fil polyester pour pneu selon la revendication 2, caractérisé en ce que la force de traction du fil est à 1,5% d'allongement supérieure à 6,8 cN/tex et à 5% d'allongement supérieure à 12 cN/tex.

6. Fil polyester pour pneu selon la revendication 2, caractérisé en ce que le rétrécissement à la chaleur du tissu calandré fini à 160°C, mesuré avec une pré-tension de 0,1 cN/tex soit compris entre 1,0 et 1,8%.

7. Fil polyester pour pneu selon la revendication 2, caractérisé en ce que l'étirage total du fil soit compris entre 1 et 3%.